# FASCICULE DE BREVET EUROPEEN

(11) **EP 2 559 082 B1**
(45) Date de publication et mention de la délivrance du brevet: **29.03.2017**
(21) Numéro de dépôt: 11713808.1
(22) Date de dépôt: 12.04.2011
(51) Int. Cl.: H01M 2/08, H01M 6/08, C09K 3/10

(54) **GARNITURE D'ETANCHEITE EN POLYAMIDE POUR PILES ALCALINES**
POLYAMIDPACKUNGSVERSIEGELUNG FÜR ALKALIBATTERIEN
POLYAMIDE PACKING SEAL FOR ALKALINE BATTERIES

(30) Priorité: 13.04.2010 FR 1001542
(43) Date de publication de la demande: 20.02.2013
(73) Titulaire: Rhodia Operations, 93306 Aubervilliers (FR)
(72) Inventeur: LEE, Kwang-Sang, Seoul 1356 (KR); YU, Yeong Chool, Seoul 157-836 (KR)
(74) Mandataire: Vande Gucht, Anne
(86) Numéro de dépôt international: PCT/EP2011/055678
(87) Numéro de publication internationale: WO 2011/128321

(56) Documents cités:
- DE-A1- 10 055 373
- US-A- 4 333 995
- US-A1- 2004 221 446
- US-A1- 2008 051 495
- US-B1- 7 285 334
- MASSEY ET AL: "Chapter 24-Nylon 6.6/6.10-PA66/610", 1 January 2003 (2003-01-01), PERMEABILITY PROPERTIES OF PLASTICS AND ELASTOMERS : A GUIDE TO PACKAGING AND BARRIER MATERIALS, PLASTICS DESIGN LIBRARY/WILLIAM ANDREW PUBL, NORWICH, NY, US, PAGE(S) 173, XP008180011, ISBN: 1-884207-97-9

## Description

La présente invention concerne des garnitures d'étanchéité pour piles alcalines, fait à partir d'une composition polyamide comprenant au moins du polyamide 66 et du polyamide 610; et éventuellement des charges et/ou additifs. Ces garnitures d'étanchéité conviennent notamment pour les piles alcalines de types piles bâtons standard "AAA" (LR03) et "AA" (LR6).

Une pile alcaline est un type de pile fonctionnant par oxydoréduction entre le zinc (Zn) et le dioxyde de manganèse (MnO₂) qui tire son nom du fait que ses deux électrodes nommées pôle positif et pôle négatif sont plongées dans un électrolyte alcalin d'hydroxyde de potassium (KOH).

Les piles alcalines peuvent être fabriquées sous forme de cylindres et de boutons. Une pile cylindrique est contenue dans un tube d'acier, qui sert de collecteur du courant de la cathode. Celle-ci est constituée d'un mélange d'une pâte de dioxyde de manganèse compressée additionnée de poudre de carbone pour améliorer la conductivité. Cette pâte peut être coulée dans le tube ou insérée sous forme d'anneaux préformés. Le trou central de la cathode est revêtu d'un séparateur qui empêche le mélange des produits de l'anode et de la cathode et le court-circuit de l'élément de pile. L'anode est constituée d'une dispersion de poudre de zinc dans un gel contenant l'électrolyte d'hydroxyde de potassium. Dans les types de piles bâtons standard, l'anode correspond à l'extrémité plate tandis que la cathode est celle avec un bouton en relief.

Avec le temps, les piles alcalines sont susceptibles de laisser fuir de l'hydroxyde de potassium, substance caustique causant irritations respiratoires, oculaires et cutanées, et entrainant une diminution des performances de la pile dans le temps. Il existe donc ainsi des joints d'étanchéité, également appelé garniture d'étanchéité (gasket battery en anglais) permettant de ralentir ou d'éviter les fuites d'hydroxyde de potassium. Ces garnitures d'étanchéité peuvent être à base de polyamide 66 tel que mentionné dans la demande US 2006/0222938. Ces garnitures peuvent être également composées de polyamide 612 ou de polyamide 610 comme mentionné dans la demande WO2009/087798.

La demande US2004/221446 décrit une garniture d'étanchéité pour pile alcaline comprenant du polyamide 66 recouvert par du polyamide 610. La demande DE10055373 A1 décrit un joint d'étanchéité pour batterie à base d'une composition de résine thermoplastique comprenant: a) 3 à 44% en poids d'une résine de polypropylène, b) 45 à 94% en poids d'une résine de polyamide; et c) 1 à 20% en poids d'un copolymère séquencé de polypropylène-polyamide. Par ailleurs, la demande US2008/051495 concerne des compositions ignifugées comprenant du polyamide 66 et du polyamide 610. Toutefois, il apparait que ces résines polyamides ne permettent pas une rétention et une résistance suffisante de l'hydroxyde de potassium.

La demanderesse a découvert de manière tout à fait surprenante qu'un mélange de polyamide 66 et de polyamide 610 permettait de réaliser des garnitures d'étanchéité pour piles alcalines tout à fait satisfaisantes et présentant notamment une bonne résistance chimique à l'hydroxyde de potassium permettant une diminution très importante des fuites, bien plus effective qu'avec les autres matrices polyamides classiquement utilisés dans le domaine.

La présente invention a ainsi pour principal objet une garniture d'étanchéité pour piles alcalines, fait à partir d'une composition polyamide comprenant au moins du polyamide 66 et du polyamide 610 ; et éventuellement des charges et/ou additifs. La présente invention concerne également l'utilisation d'une telle composition pour diminuer ou éviter la fuite d'hydroxyde de potassium d'une pile alcaline.

La composition comprend préférentiellement de 30 à 70 % en poids de polyamide 66 et de 30 à 70 % en poids de polyamide 610 ; par rapport au poids total de la composition.

Les polyamides 66 et 610 sont bien décrits dans la littérature, notamment dans le Nylon Plastics Handbook de M.I. Kohan ; Hanser, 1995. On entend notamment par polyamide 66 un polyamide comprenant au moins 80 % en masse de motifs hexaméthylène adipamide. On entend notamment par polyamide 610 un polyamide comprenant au moins 80 % en masse de motifs hexaméthylène sebacamide. Ces polyamides peuvent donc parfaitement être des (co)polyamides. Les polyamides 66 et 610 sont généralement mélangés à chaud, notamment par extrusion.

La composition selon l'invention peut en outre comprendre des additifs classiquement utilisés pour la fabrication de compositions polyamides. Ainsi, on peut citer les lubrifiants, les agents ignifugeants, les plastifiants, les agents nucléants, les agents modificateurs de chocs, les charges de renfort ou de remplissage, les catalyseurs, les stabilisants lumière et/ou thermique, les antioxydants, les antistatiques, les colorants, les matifiants, les additifs d'aide au moulage ou autres additifs conventionnels.

Les charges de renfort ou de remplissages selon la présente invention, peuvent être par exemple des charges fibreuses et/ou des charges non fibreuses.

Comme charge fibreuses on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 µm. Ces charges peuvent présenter un ensimage surfacique qui assure l'adhésion mécanique entre les fibres et la matrice polyamide.

La concentration pondérale des charges de renfort ou de remplissage est comprise avantageusement entre 1 % et 60 % en poids par rapport au poids total de la composition, de préférence entre 15 et 50 %.

On peut notamment ajouter à la composition polyamide des agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les ethylène-propylène-diène momonère (EPDM) avec éventuellement un anhydride maléïque greffé.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %, préférentiellement être 5 et 20 %.

On préfère notamment une composition comprenant :
- 30 à 70 % en poids de polyamide 66 ;
- 30 à 70 % en poids de polyamide 610 ;
- 0,1 à 40 % en poids d'agent modifiant la résistance aux chocs ; par rapport au poids total de la composition.

Ces charges et additifs peuvent être ajoutés à la composition polyamide par des moyens usuels adaptés à chaque charge ou additif, tel que par exemple lors de la polymérisation ou en mélange en fondu.

Les compositions de l'invention sont généralement obtenus par mélange des différents constituants à chaud, par exemple dans une extrudeuse mono ou bivis, à une température suffisante pour maintenir la résine polyamide en milieu fondu ; ou a froid dans un mélangeur mécanique notamment. Généralement, le mélange obtenu est extrudé sous forme de joncs qui sont coupés en morceaux pour former des granulés. Les composés peuvent être ajoutés à n'importe quel moment du processus de fabrication du matériau plastique, notamment par mélange à chaud ou à froid avec la matrice plastique. L'addition des composés et des additifs peut être réalisée par ajout de ces composés dans la matrice plastique fondue sous forme pure ou sous forme de mélange concentré dans une matrice telle que par exemple une matrice plastique.

La composition est préférentiellement une composition à mouler, par exemple sous forme de granulés ou de poudre, servant notamment à la fabrication d'articles par un procédé de moulage ou de moulage par injection notamment. La composition selon l'invention peut être utilisée pour tout procédé de mise en forme des matières plastiques, tels que par exemple les procédés de moulage, notamment le moulage par injection, le rotomoulage, le frittage, la coulée, ou d'extrusion comme l'extrusion soufflage et le filmage, ou encore les procédés de filage. L'invention concerne ainsi aussi des procédés de fabrication d'articles moulés ou extrudés par mise en forme d'une composition de l'invention.

Les garnitures d'étanchéité de l'invention sont utilisables pour divers types de piles alcalines, notamment les piles boutons ou cylindriques. On préfère notamment les types de piles bâtons standard "AAA" (LR03), "AA" (LR6), "C" (LR14), "sub-C" et "D". Le format des piles électriques est normalisé par la Commission électrotechnique internationale (CEI) et par l'*American National Standards Institute* (ANSI). Ces piles peuvent être rechargeables ou non rechargeables.

La présente invention concerne aussi une pile alcaline comprenant des éléments de génération d'électricité et une garniture d'étanchéité selon la présente invention.

La présente invention concerne également un procédé de fabrication de garnitures d'étanchéité par moulage d'une composition selon l'invention.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales. Le terme et/ou inclut les significations et, ou, ainsi que toutes les autres combinaisons possibles des éléments connectés à ce terme. D'autres détails ou avantages de l'invention apparaîtront plus clairement au vu des exemples donnés ci-dessous uniquement à titre indicatif.

### PARTIE EXPERIMENTALE

Les compositions des Exemples 1 et 2 et des exemples comparatifs C1 et C2 sont préparés et testés comme mentionné ci-dessous :
Les composés utilisés sont les suivants :
   - A-1 : polyamide 66 Technyl 26A, fabriqué par Rhodia, ayant une viscotié relative de 2,6 (mesuré avec 1 % en poids d'acide sulfurique à 23°C) et un point de fusion de 262°C
   - A-2 : polyamide 610 ayant une viscosité relative de 2,8 (mesuré avec 1 % en poids d'acide sulfurique à 23°C) et un point de fusion de 218°C
   - B : élastomère ethylene-propylène greffé avec de l'anhydride maléique, vendu sous le nom commercial KEPA 1150, par Keumho petrochemical, Korea
   - C: talc (#600 mesh)
   - D: Additifs comprenant des antioxidants et des agents de lubrification

Les compositions sont fabriqués par mélange des composés dans une extrudeuse bi-vis (diamètre intérieur 30 mm ; L/D=30). Le profil de température de l'extrudeuse est compris entre 260 et 280°C. La vitesse d'extrusion est compris entre 250 et 300 rpm sous un vide de 50-70 cm Hg.

Les granulés obtenus et après séchage sont mis en forme dans une presse à injecter ENGEL avec une force de compression de 80 tonnes et un volume d'injection de 189,44 cc. La température du cylindre est de 280°C et la température du moule est de 80°C. Le cycle d'injection est de refroidissement est de 15 secondes environ. Différents spécimens selon les tests a effectuer ont été réalisés. Des garniture d'étanchéité on été également réalisés et assemblé à des piles alcalines LR6 pour des tests de fuite de KOH.

Les formulations sont testés et les résultats sont mentionnés dans le Tableau 1 suivant :

**Tableau 1**

| | Méthode | Unité | **C1** | **C2** | **1** | **2** |
|---|---|---|---|---|---|---|
| A-1 | | % | 97,8 | 86,8 | 48,9 | 43,4 |
| A-2 | | % | 0 | 0 | 48,9 | 43,4 |
| B | | % | 0 | 11 | 0 | 11 |
| C | | % | 0,2 | 0,2 | 0,2 | 0,2 |
| D | | % | 2 | 2 | 2 | 2 |
| Résistance à la traction | D638 | Kgf/cm² | *nm* | *nm* | *nm* | 600 |
| Elongation à la rupture | D638 | % | *nm* | *nm* | *nm* | 39 |
| Résistance à la flexion | D790 | Kgf/cm² | *nm* | *nm* | *nm* | 810 |
| Impact Izod | D256 | Kgf.cm/cm | *nm* | *nm* | *nm* | 19 |
| HDT | D648 | °C | *nm* | *nm* | *nm* | 66 |
| Blanchiment | | | 6 | 0 | 4 | 0 |
| Fuite de KOH : | | | | | | |
| après 1 semaine | | | 16 | 0 | 0 | 0 |
| 2 semaines | | | 19 | 0 | 0 | 0 |
| 3 semaines | | | 10 | 0 | 0 | 0 |
| 4 semaines | | | 5 | 7 | 0 | 0 |
| 5 semaines | | | - | 7 | 1 | 0 |
| 6 semaines | | | - | 10 | 4 | 0 |
| 7 semaines | | | - | 0 | 3 | 0 |
| 8 semaines | | | - | 3 | 4 | 0 |
| 9 semaines | | | - | 4 | 5 | 0 |
| 10 semaines | | | - | 19 | 8 | 0 |

| | | | | | | |
|---|---|---|---|---|---|---|
| *nm : non mesuré* | | | | | | |

L'HDT est mesuré selon la norme ASTM D-648 (18,5 kgf/cm²).

La blanchiment est observé visuellement par rapport à 32 garnitures d'étanchéité.

Les fuites de KOH sont observés sur 50 piles alcalines LR6 contenant 40 % d'électrolytes KOH placées pour 10 semaines à 71°C. A la fin de chaque semaine, on observe visuellement le nombre de piles sur lesquelles on observe des fuites (leakage).

On observe ainsi au tableau 1 que les formulations des exemples 1 et 2 présentent une bien meilleure résistance chimique au KOH que les formulations de l'art antérieur.

## Revendications

1. Garniture d'étanchéité pour piles alcalines, fait à partir d'une composition polyamide comprenant au moins un mélange de polyamide 66 et de polyamide 610 ; et éventuellement des charges et/ou additifs.

2. Garniture selon la revendication 1, **caractérisée en ce que** la composition comprend de 30 à 70 % en poids de polyamide 66, par rapport au poids total de la composition.

3. Garniture selon la revendication 1 ou 2, **caractérisée en ce que** la composition comprend de 30 à 70 % en poids de polyamide 610, par rapport au poids total de la composition.

4. Garniture selon l'une quelconque des revendications 1 à 3, **caractérisée en ce que** la composition comprend des additifs choisis dans le groupe constitué par les lubrifiants, les agents ignifugeants, les plastifiants, les agents nucléants, les agents modificateurs de chocs, les charges de renfort ou de remplissage, les catalyseurs, les stabilisants lumière et/ou thermique, les antioxydants, les antistatiques, les colorants, les matifiants, et les additifs d'aide au moulage.

5. Garniture selon l'une quelconque des revendications 1 à 4, **caractérisée en ce que** la composition comprend des agents modifiants la résistance aux chocs.

6. Garniture selon l'une quelconque des revendications 1 à 5, **caractérisée en ce que** la composition comprend
- 30 à 70 % en poids de polyamide 66 ;
- 30 à 70 % en poids de polyamide 610 ;
- 0,1 à 40 % en poids d'agent modifiant la résistance aux chocs ; par rapport au poids total de la composition.

7. Pile alcaline comprenant des éléments de génération d'électricité et une garniture d'étanchéité selon l'une quelconque des revendications 1 à 6.

8. Procédé de fabrication de garnitures d'étanchéité par moulage d'une composition selon l'une quelconque des revendications 1 à 6.

9. Utilisation d'une garniture d'étanchéité selon l'une quelconque des revendications 1 à 6 dans une pile alcaline pour diminuer ou éviter la fuite d'hydroxyde de potassium.

## Patentansprüche

1. Packungsversiegelung für Alkalibatterien, bestehend aus einer Polyamidzusammensetzung, umfassend mindestens ein Gemisch von Polyamid 66 und Polyamid 610 und eventuell Füllstoffe und/oder Zusatzstoffe.

2. Packung nach Anspruch 1, **dadurch gekennzeichnet, dass** die Zusammensetzung 30 bis 70 Gew.-% Polyamid 66 bezogen auf das Gesamtgewicht der Zusammensetzung umfasst.

3. Packung nach Anspruch 1 oder 2, **dadurch gekennzeichnet, dass** die Zusammensetzung 30 bis 70 Gew.-% Polyamid 610 bezogen auf das Gesamtgewicht der Zusammensetzung umfasst.

4. Packung nach einem der Ansprüche 1 bis 3, **dadurch gekennzeichnet, dass** die Zusammensetzung Zusatzstoffe umfasst, die in der Gruppe ausgewählt sind, die von den Schmiermitteln, den Flammschutzmitteln, den Weichmachern, den Nukleierungsmitteln, den die Schlagfestigkeit modifizierenden Mitteln, den Füllstoffen zur Verstärkung oder Füllung, den Katalysatoren, den Lichtund/oder Wärmestabilisatoren, den Antioxidantien, den Antistatika, den Farbstoffen, den Mattierungsmitteln, den Spritzguss unterstützenden Zusatzstoffen gebildet ist.

5. Packung nach einem der Ansprüche 1 bis 4, **dadurch gekennzeichnet, dass** die Zusammensetzung die die Schlagfestigkeit modifizierenden Mittel umfasst.

6. Packung nach einem der Ansprüche 1 bis 5, **dadurch gekennzeichnet, dass** die Zusammensetzung umfasst:
- 30 bis 70 Gew.-% Polyamid 66;
- 30 bis 70 Gew.-% Polyamid 610;
- 0,1 bis 40 Gew.-% eines die Schlagfestigkeit modifizierenden Mittels; bezogen auf das Gesamtgewicht der Zusammensetzung.

7. Alkalibatterie, umfassend Elektrizität erzeugende Elemente und eine Packungsversiegelung nach einem der Ansprüche 1 bis 6.

8. Verfahren zur Herstellung von Packungsversiegelungen durch Formung einer Zusammensetzung nach einem der Ansprüche 1 bis 6.

9. Verwendung einer Packungsversiegelung nach einem der Ansprüche 1 bis 6 in einer Alkalibatterie, um das Austreten von Kaliumhydroxid zu verringern oder zu vermeiden.

## Claims

1. Packing seal for alkaline batteries, made from a polyamide composition comprising at least a mixture of polyamide 66 and polyamide 610; and optionally fillers and/or additives.

2. Packing seal according to Claim 1, **characterized in that** the composition comprises from 30% to 70% by weight of polyamide 66 relative to the total weight of the composition.

3. Packing seal according to Claim 1 or 2, **characterized in that** the composition comprises from 30% to 70% by weight of polyamide 610 relative to the total weight of the composition.

4. Packing seal according to any one of Claims 1 to 3, **characterized in that** the composition comprises additives chosen from the group consisting of lubricants, flame retardants, plasticizers, nucleating agents, impact modifiers, reinforcing or packing fillers, catalysts, light and/or heat stabilizers, antioxidants, antistatics, colorants, mattifying agents and molding aids.

5. Packing seal according to any one of Claims 1 to 4, **characterized in that** the composition comprises impact-strength modifiers.

6. Packing seal according to any one of Claims 1 to 5, **characterized in that** the composition comprises:
- 30% to 70% by weight of polyamide 66;
- 30% to 70% by weight of polyamide 610;
- 0.1 % to 40% by weight of impact-strength modifier; relative to the total weight of the composition.

7. Alkaline battery comprising electricity-generating elements and a packing seal according to any one of Claims 1 to 6.

8. Process for manufacturing packing seals by molding a composition according to any one of Claims 1 to 6.

9. Use of a packing seal according to any one of claims 1 to 6 in an alkaline battery for reducing or preventing the leakage of potassium hydroxide.
